# EUROPEAN PATENT APPLICATION

(11) **EP 1 443 508 A1**
(43) Date of publication of application: **04.08.2004**
(21) Application number: 02775285.6
(22) Date of filing: 02.10.2002
(51) Int. Cl.: G11B 7/26

(54) **METHOD OF MANUFACTURING MULTILAYER OPTICAL RECORDING MEDIUM AND MULTILAYER OPTICAL RECORDING MEDIUM**

(30) Priority: 04.10.2001 JP 2001308111
(71) Applicant: TDK Corporation, Chuo-ku, Tokyo 103-8272 (JP)
(72) Inventor: KOMAKI, Tsuyoshi, C/O TDK Corporation, Tokyo 103-8272 (JP); YAMAGA, Kenji, C/OTDK Corporation, Tokyo 103-8272 (JP)
(74) Representative: HOFFMANN - EITLE
(86) International application number: PCT/JP2002/010309
(87) International publication number: WO 2003/032306

(57) **Abstract**

The method of manufacturing a multilayer optical recording medium according to this invention is a method of manufacturing a multilayer optical recording medium, having two recording layers deposited, with a spacer layer sandwiched therebetween, on a substrate (D1) formed with a central mounting hole (1a). In forming the spacer layer between a second recording layer (L1) and a first recording layer, the substrate (D1) which has a fitting protrusion (D1a) formed around the central mounting hole (1a) is fixed to a turntable (12) in a state where a center pin (12c) of the turntable (12) is inserted through the central mounting hole (1a). After a coating liquid (R) is dropped onto the substrate (D1) at a predetermined location radially outward of the fitting protrusion (D1a), the stamper (21) is placed over the substrate (D1) while fitting a fitting groove (21b) and the fitting protrusion (D1a) to each other. Then, the turntable (12) is caused to rotate to thereby spin-coat the coating liquid (R). This makes it possible to form the spacer layer without making the recording layers off-center.

## Description

### Technical Field

This invention relates to a method of manufacturing a multilayer optical recording medium having a plurality of recording layers deposited with a spacer layer sandwiched therebetween, and a multilayer recording medium.

### Background Art

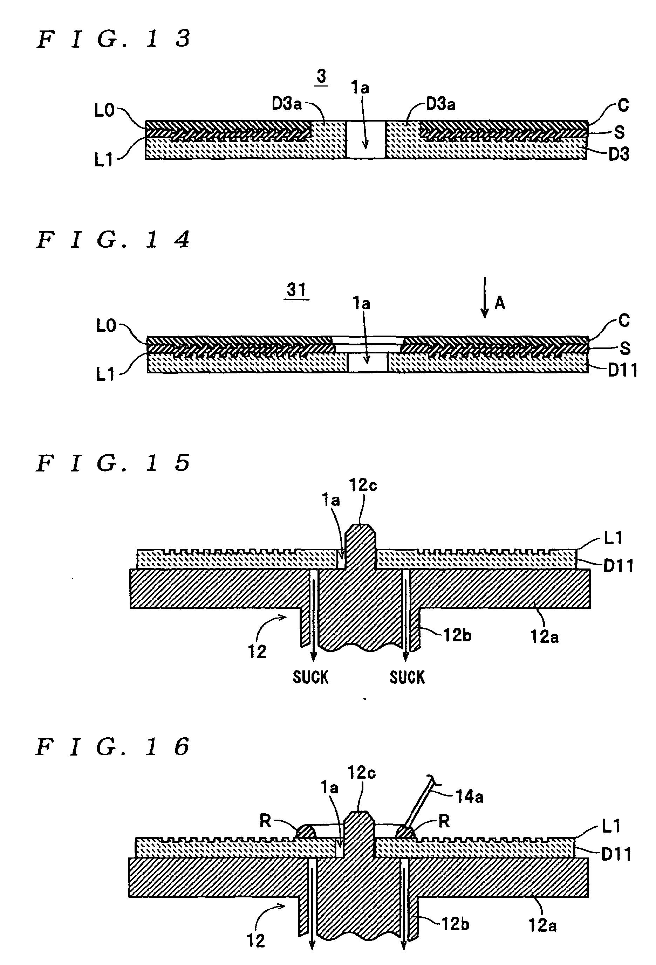

The present applicant has developed a multilayer optical recording medium 31 shown in FIG. 14 as this kind of multilayer optical recording medium. This multilayer optical recording medium 31 has a recording layer L1, a spacer layer S, a recording layer L0, and a cover layer C sequentially deposited on a disk-shaped substrate D11 having a central mounting hole 1a formed through a central portion thereof. In this multilayer optical recording medium 31, the recording layer L1 is comprised of a reflective film for reflecting a laser beam set to a recording power and applied for recording and a laser beam set to a reproducing power and applied for reproduction (each of which is hereinafter also simply referred to as "the laser beam" when it is not required to make a distinction between the two laser beams), a phase change film whose optical reflectance is changed with a change in an optical constant caused by application of the laser beam set to the recording power, and a protective film for protecting the phase change film, which are sequentially deposited on grooves and lands formed on a surface of the substrate D11. The spacer S is in the form of a thin film made of a light-transmissive resin such that it has a thickness of approximately 20 µm. On the other hand, the recording layer L0 is comprised of a phase change film, a protective film, and the like, sequentially deposited on grooves and lands formed on a surface of the spacer layer S. The cover layer C, which is a layer that not only protects the recording layer L0 from being scratched, but also functions as a part of an optical path (lens), is in the form of a thin film made of a light-transmissive resin. In the multilayer optical recording medium 31, the laser beam is applied in a direction indicated by an arrow A in FIG. 14, whereby recording of record data in the recording layers L0 and L1 or reading record data from the recording layers L0 and L1 is performed.

In manufacturing the multilayer optical recording medium 31, first, the recording layer L1 is formed on the substrate D11 e.g. by the sputtering method. Then, a coating liquid R is applied over the recording layer L1 by the spin coating method to thereby form the spacer layer S. In doing this, as shown in FIG. 15, first, the substrate D11 is placed on a base 12a such that a center pin 12c of a turntable 12 is inserted through the central mounting hole 1a of the substrate D11, with the surface having the recording layer L1 formed thereon facing upward. In this case, the base 12a is in the form of a disk with a flat upper surface and connected to a motor, not shown, via a shaft 12b. Further, during application of the coating liquid R, the turntable 12 is rotated by the motor in a state where the substrate D11 having its radially innermost portion (chucking area) sucked by negative pressure is placed thereon. Further, the center pin 12c is a centering pin for aligning the central portion of the substrate D11 and the central portion of the turntable 12, and erected on the central portion of the base 12a, in the form of a cylinder having a diameter slightly smaller than that of the central mounting hole 1a, so as to facilitate mounting and removal of the substrate D11.

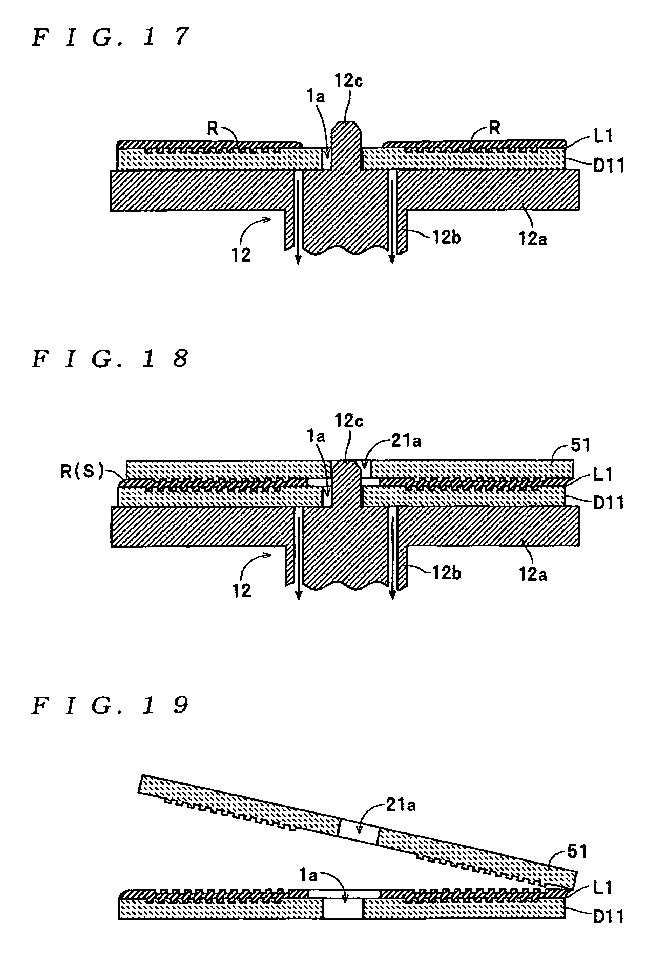

Next, the coating liquid R is dropped onto the substrate D11 from the tip of a nozzle 14a, as shown in FIG. 16, with the turntable 12 in the above-described state being rotated at a low speed. In doing this, the coating liquid R is dropped around the central mounting hole 1a (onto the inner peripheral portion of the substrate D11). Then, the turntable 12 is rotated at a high speed to cause the coating liquid R to spread over the substrate D11 to the outer peripheral portion thereof. In doing this, the rotational speed of the turntable 12 and a time period for maintaining high-speed rotation of the same are controlled as required, whereby the coating liquid R is radially moved from the inner peripheral portion to the outer peripheral position of the substrate D11 by centrifugal force generated by the rotation of the turntable 12. In the meantime, superfluous part of the coating liquid R having reached the outer periphery of the substrate D11 flies off the substrate D11 by the centrifugal force acting thereon. As a result, all area of the surface of the substrate D11 is coated with a thin and substantially even film of the coating liquid R as shown in FIG. 17.

Next, as shown in FIG. 18, a stamper 51 is placed over the substrate D11 having been coated with the coating liquid R, such that the center pin 12c of the turntable 12 is inserted through a central hole 21a of the stamper 51. In this case, the stamper 51 is formed of a material capable of transmitting ultraviolet rays for curing the coating liquid R, as described hereinafter. Further, the central hole 21a is formed to have approximately the same diameter as that of the central mounting hole 1a. Furthermore, the stamper 51 has a lower surface thereof subjected to treatment for forming asperities, such as grooves, lands, and pits, for the recording layer L0. Immediately after the substrate D11 has been coated, the coating liquid R still has fluidity. Therefore, the stamper 51 is placed on the coating liquid R, with the coating liquid R conforming to the asperities of the stamper 51, i.e. the shapes of the grooves, the lands, and so forth. Then, ultraviolet rays are applied to the substrate D11 in this state to cure the coating liquid R, whereby the spacer layer S is completed. Subsequently, the stamper 51 is removed from the substrate D11 as shown in FIG. 19. Thereafter, the recording layer L0 is formed on the spacer layer S, and then the cover layer C is formed by spin-coating the coating liquid R over the recording layer L0 and curing the coating liquid. Thus, the manufacturing of the multilayer optical recording medium 31 is completed.

### Disclosure of the Invention

From the study of the above described method of manufacturing a multilayer optical recording medium 31, the present inventors found out the following points for improvement: In this manufacturing method, the spacer layer S is formed by curing the coating liquid in a state where the stamper 51 is placed over the substrate D11 having been spin-coated with the coating liquid. In this case, as described hereinabove, the center pin 12c of the turn table 12 is formed to have a diameter slightly smaller than that of the central mounting hole 1a of the substrate D11 and that of the central hole 21a of the stamper 51, so as to facilitate mounting and removal of the substrate D11 and the stamper 51. Owing to this, slight gaps are formed between the rim of the central mounting hole 1a of the substrate D11 placed on the turntable 12 and the peripheral surface of the center pin 12c, and between the rim of the central hole 21a of the stamper 51 placed over the substrate D11 and the peripheral surface of the center pin 12c. In this case, for example, as shown in FIG. 18, if the substrate D11 and the stamper 51 are placed on the turntable 12 in respective states deviated in different directions, the spacer layer S is formed in a state where the grooves and lands on the recording layer L0 are misaligned from those on the recording layer L1, causing eccentricity. Therefore, improvement in this point is preferable.

On the other hand, as a method of reducing the eccentricity, it is contemplated to form the center pin 12c such that it has an increased diameter for being rather tightly fitted into the central mounting hole 1a of the substrate D11 and the central hole 21a of the stamper 51. According to this method, it is possible to position the substrate D11 and the stamper 51 such that the central mounting hole 1a of the substrate D11 and the central hole 21a of the stamper 51 are aligned with each other. However, while this method provides the improvement of reduced eccentricity, there arises a problem of mounting and removal of the substrate D11 and the stamper 51 to and from the center pin 12c. That is, it becomes difficult to fit the substrate D11 on the center pin 12c and remove the former from the latter. This brings about the problem of markedly reduced productivity and increased manufacturing costs of the multilayer optical recording medium 31.

The present invention has been made to solve the above described points for improvement, and a main object thereof is to provide a method of manufacturing a multilayer optical recording medium, and a multilayer optical recording medium-manufacturing apparatus, which are capable of forming a spacer layer without making recording layers off-center.

The method of manufacturing a multilayer optical recording medium, according to the present invention, is a method of manufacturing a multilayer optical recording medium having N recording layers (N is a natural number equal to or larger than 2) deposited, with a spacer layer sandwiched therebetween, on a substrate having a central portion thereof formed with a central mounting hole, wherein in forming the spacer layer between an (M+1)-th recording layer (M is a natural number equal to or smaller than (N-1)) and an M-th recording layer, as counted from an incident direction of a laser beam to be applied during reproduction or a laser beam to be applied during recording, the substrate which has a substrate-side fitting portion formed around the central mounting hole such that the substrate-side fitting portion can be fitted to a stamper-side fitting portion formed on the stamper for forming the M-th recording layer, and the (M+1)-th recording layer formed thereon, is fixed to the turntable, in a state where a centering pin erected on a central portion of the turntable is inserted through the central mounting hole of the substrate; after a coating liquid for forming the spacer layer is dropped onto an upper surface of the substrate at a predetermined location radially outward of the substrate-side fitting portion, the stamper is placed over the substrate while fitting the stamper-side fitting portion and the substrate-side fitting portion to each other; and then the turntable is caused to rotate to thereby spin-coat the coating liquid.

In this method of manufacturing an optical recording medium, in forming the spacer layer between the (M+1)-th recording layer and the M-th recording layer, the substrate which has a substrate-side fitting portion formed around the central mounting hole is fixed to the turntable by inserting the centering pin of the turntable through the central mounting hole of the substrate, and after the coating liquid for forming the spacer layer is dropped at a predetermined location of the substrate radially outward of the substrate-side fitting portion, the stamper is placed over the substrate while fitting the stamper-side fitting portion and the substrate-side fitting portion to each other. Then, the turntable is caused to rotate to thereby spin-coat the coating liquid. This makes it possible to spin-coat the substrate with the coating liquid in a state where the central portion of the substrate and that of the stamper are aligned by fitting of the substrate-side fitting portion and the stamper-side fitting portion, and therefore, it is possible to produce a non-defective multilayer optical recording medium without making the recording layers off-center. Further, during drawing of the coating liquid, the substrate and the stamper can be kept parallel with each other, so that it is possible to make uniform the coating thickness of the coating liquid in circumferential and radial directions of the substrate.

The method of manufacturing a multilayer optical recording medium, according to the present invention, is a method of manufacturing a multilayer optical recording medium having N recording layers (N is a natural number equal to or larger than 2) deposited, with a spacer layer sandwiched therebetween, on a substrate having a central portion thereof formed with a central mounting hole, wherein in forming the spacer layer between an (M+1)-th recording layer (M is a natural number equal to or smaller than (N-1)) and an M-th recording layer, as counted from an incident direction of a laser beam to be applied during reproduction or a laser beam to be applied during recording, the substrate which has a substrate-side fitting portion formed around the central mounting hole such that the substrate-side fitting portion can be fitted to a stamper-side fitting portion formed on the stamper for forming the M-th recording layer, and the (M+1)-th recording layer formed thereon, is fixed to the turntable, by inserting a centering pin erected on a central portion of the turntable through the central mounting hole of the substrate; after a coating liquid for forming the spacer layer is dropped onto an upper surface of the substrate at a predetermined location radially outward of the substrate-side fitting portion, the turntable is caused to rotate to thereby spin-coat the coating liquid; then the stamper is placed over the substrate while fitting the stamper-side fitting portion and the substrate-side fitting portion to each other; and the coating liquid is cured in the resulting state.

In this method of manufacturing an optical recording medium, in forming the spacer layer between the (M+1)-th recording layer and the M-th recording layer, the substrate which has a substrate-side fitting portion formed around the central mounting hole is fixed to the turntable by inserting the centering pin of the turntable through the central mounting hole of the substrate, and after the coating liquid for forming the spacer layer is dropped at a predetermined location of the substrate radially outward of the substrate-side fitting portion, the turntable is caused to rotate to thereby spin-coat the coating liquid. Then, in a state where the stamper has been placed over the substrate while fitting the stamper-side fitting portion and the substrate-side fitting portion to each other, and the coating liquid is cured. This makes it possible to cure the coating liquid in the state where the central portion of the substrate and the central portion of the stamper have been aligned by fitting of the substrate-side fitting portion and the stamper-side fitting portion when the stamper has been placed over the stamper. Therefore, it is possible to produce a non-defective multilayer optical recording medium without making the recording layers off-center.

In this case, it is preferred that an energy radiation-curable resin coating liquid is used as the coating liquid for forming the spacer layer, and a stamper formed of an energy radiation-transmissive material is used as the stamper. This makes it possible to form the spacer layer in a shorter time period compared with a method using a thermosetting resin which is cured by application of heat. As a result, it is possible to sufficiently reduce the manufacturing costs of the multilayer optical recording medium.

Further, it is preferred that one of the stamper-side fitting portion and the substrate-side fitting portion is formed by a fitting protrusion having an annular shape in plan view and the other thereof is formed by a fitting groove formed to be capable of being fitted on the fitting protrusion. This facilitates the operation of fitting the stamper-side fitting portion and the substrate-side fitting portion when the stamper is placed over the stamper. Further, by forming the substrate-side fitting portion as a fitting protrusion having an annular shape in plan view, it is possible to prevent the coating liquid dropped onto the substrate from flowing into the central mounting hole. As a result, it is possible to prevent the coating liquid from being attached to the chucking area.

The multilayer optical recording medium according to the present invention is a multilayer optical recording medium manufactured by the method of manufacturing a multilayer optical recording medium according to the present invention, wherein the substrate-side fitting portion is formed on the substrate. With this arrangement, it is possible to form the spacer layer in a state where the central portion of the substrate and that of the stamper have been aligned by fitting of the substrate-side fitting portion and the stamper-side fitting portion when the stamper is placed on the substrate during manufacturing of the multilayer optical recording medium. Therefore, it is possible to produce a non-defective multilayer optical recording medium in which an (M+1)-th recording layer and an M-th recording layer are prevented from being off-center.

It should be noted that the present disclosure relates to the subject matter included in Japanese Patent Application No. 2001-308111 filed on October 4, 2001, and it is apparent that all the disclosures therein are incorporated herein by reference.

### Brief Description of Drawings

FIG. 1 is a side cross-sectional view of a multilayer optical recording medium 1 according to an embodiment of the present invention, in its completely manufactured state;
FIG. 2 is a block diagram showing the configuration of a coating apparatus 11 according to an embodiment of the present invention;
FIG. 3 is a perspective view of the appearance of a turntable 12 of the coating apparatus 11;
FIG. 4 is a side cross-sectional view of a state of a substrate D1 having been placed on the turntable 12;
FIG. 5 is a side cross-sectional view of a state of a coating liquid R having been dropped onto the substrate D1 on the turntable 12;
FIG. 6 is a side cross-sectional view of a state of a stamper 21 having been moved to a location above the substrate D1 in the FIG. 5 state;
FIG. 7 is a side cross-sectional view of the stamper 21 placed on the substrate D1 in the FIG. 6 state;
FIG. 8 is a side cross-sectional view of a state of the coating liquid R between the substrate D1 and the stamper 21 having reached the outer periphery of the substrate D1;
FIG. 9 is a side cross-sectional view of a state of the stamper 21 having been removed from the substrate D1 having a spacer layer S formed thereon;
FIG. 10 is a side cross-sectional view of a substrate D2 and a stamper 22 according to another embodiment of the present invention;
FIG. 11 is a side cross-sectional view of a multilayer optical recording medium 2 according to the embodiment of the present invention, in its completely manufactured state;
FIG. 12 is a side cross-sectional view of a substrate D3 and a stamper 23 according to another embodiment of the present invention;
FIG. 13 is a side cross-sectional view of a multilayer optical recording medium 3 according to the embodiment of the present invention, in its completely manufactured state;
FIG. 14 is a side cross-sectional view of a multilayer optical recording medium 31 in its completely manufactured state;
FIG. 15 is a side cross-sectional view of a state of a substrate D11 having been placed on a turntable 12;
FIG. 16 is a side cross-sectional view of a state of the coating liquid R having been dropped onto the substrate D11 on the turntable 12;
FIG. 17 is a side cross-sectional view of a state of the coating liquid R having reached the outer periphery of the substrate D11;
FIG. 18 is a side cross-sectional view of a state of a stamper 51 having been placed over the substrate D11 in the FIG. 14 state; and
FIG. 19 is a side cross-sectional view of a state of the stamper 51 having been removed from the substrate D11 having a spacer layer S formed thereon.

### Best Mode for Carrying Out the Invention

Hereinafter, preferred embodiments of a method of manufacturing a multilayer optical recording medium and a multilayer recording medium, according to the present invention, will be described with reference to the accompanying drawings.

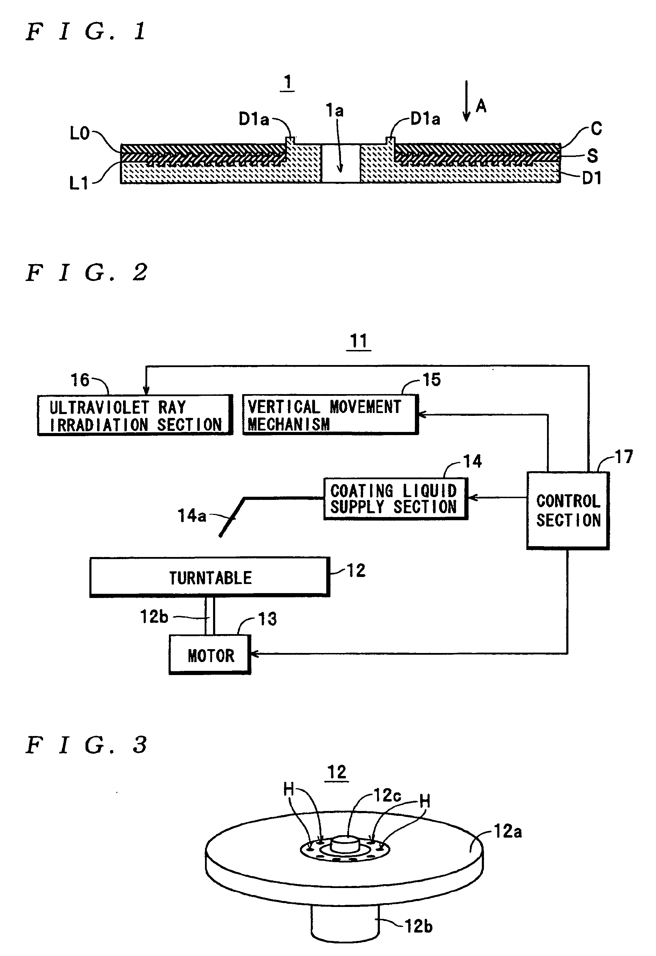

First of all, the structure of the multilayer optical recording medium 1 will be described with reference to FIG. 1.

The multilayer optical recording medium 1 is constructed by sequentially depositing a recording layer L1 corresponding to an (M+1)-th (M = 1) recording layer in the present invention, a spacer layer S, a recording layer L0 corresponding to an M-th (M = 1) recording layer in the present invention, and a cover layer C, on a substrate D1, such that record data can be read or recorded by applying a laser beam set to a reproducing power or a laser beam set to a recording power, onto the multilayer optical recording medium 1 from a cover layer C side in a direction indicated by an arrow A in FIG. 1. The substrate D1 is formed by injection molding such that it is disk-shaped (flat plate-shaped) with an overall diameter of approximately 120 mm. Further, the substrate D1 has a central portion thereof formed with a central mounting hole 1a having a diameter of approximately 15 mm, for use when the substrate D1 is mounted in a recording and reproducing apparatus. Further, the substrate D1 is formed with an annular chucking area having a width of approximately 10 mm, at a location outward of the central mounting hole 1a, such that the upper surface (chucking surface) of the chucking area is flush with the upper surface of the cover layer C. Further, the outer peripheral portion of the chucking surface is formed with a fitting protrusion D1a which corresponds to a substrate-side fitting portion in the present invention, and formed by causing a portion of the substrate D1 to protrude such that the protruded portion has a ring-like (annular) shape in plan view. Further, radially outward of the fitting protrusion D1a, there are formed grooves, lands, and pits for the recording layer L1. The recording layer L1 is formed by forming a reflective film, a phase change film, and a protective film, on the substrate D1 by the sputtering method. The spacer layer S is formed on the recording layer L1 using a light-transmissive coating liquid R, such that it has a thickness of approximately 20 µm. Further, grooves, lands, and pits for forming the recording layer L0 are formed on the surface of the spacer layer S, by a stamper 21, as will be described hereinafter. The recording layer L0 is formed by forming a phase change film, a protective film, and the like, on the spacer layer S by the sputtering method. Further, the cover layer C is formed of a light transmissive material such that it has a thickness of approximately 90 µm.

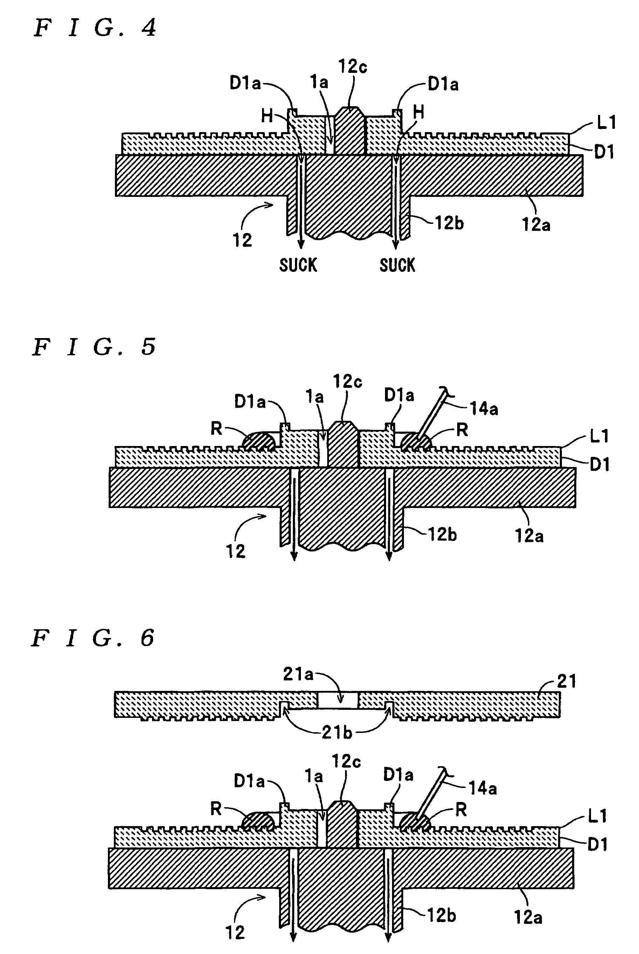

On the other hand, the stamper 21 is a resin stamper or a glass stamper as a dedicated jig for manufacturing the multilayer optical recording medium 1, which has a surface thereof subjected to water-repelling treatment, such as fluorine treatment or silicone treatment. As shown in FIG. 6, the stamper 21 is in the form of a disk made of a material capable of transmitting ultraviolet rays (energy radiation) for curing the coating liquid R. Further, further, an inner peripheral portion of a lower surface of the stamper 21 is formed with a fitting groove (stamper-side fitting portion) 21b having a ring-like (annular) shape in plan view, for having the fitting protrusion D1a of the substrate D1 fitted therein, and a part radially outward of the fitting groove 21b is subjected to treatment for forming asperities, such as grooves, lands, and pits, for the recording layer L0. In view of releasability from the spacer layer S, it is preferable that of all the surfaces of the spacer 21, at least the surface formed with the grooves, lands, and pits is subjected to surface treatment, such as fluorine treatment, and it is further preferable that the surface is formed of an amorphous cyclic polyolefin resin having an excellent releasability from an energy radiation curable resin. Further, the stamper 21 has a central portion thereof formed with a central hole 21a having approximately the same diameter as that of the central mounting hole 1a of the substrate D.

Next, the arrangement of the multilayer optical recording medium-manufacturing apparatus for manufacturing a multilayer optical recording medium by the method of manufacturing a multilayer optical recording medium, according to the present invention, will be described with reference to FIGS. 2 and 3.

The coating apparatus 11, which is the multilayer optical recording medium-manufacturing apparatus, forms the spacer layer S by applying the coating liquid R over the substrate D1 and then curing the same, when the multilayer optical recording medium 1 is manufactured. As shown in FIG. 2, the coating apparatus 11 is comprised of a turntable 12, a motor 13, a coating liquid supply section 14, a vertical movement mechanism 15, an ultraviolet ray irradiation section 16 and a control section 17. As shown in FIG. 3, the turntable 12 is comprised of a disk-shaped base 12a having a flat upper surface such that the substrate D1 can be placed thereon, a shaft 12b connected to the center of the lower surface of the base 12a and connected to the rotational shaft of the motor 13, and a center pin 12c erected on a central portion of the upper surface of the base 12a. In this case, the center pin 12c is in the form of a cylinder with a diameter slightly smaller than that of the central mounting hole 1a of the substrate D1, and has a periphery of the top thereof chamfered such that the center pin 12c can be easily inserted into the central mounting hole 1a of the substrate D1. It should be noted that the turntable 12 is not limited to the configuration in which the upper surface thereof is flat, but may be configured such that protrusions are formed respectively on the most inner peripheral and the most outer peripheral portions of the upper surface of the turntable 12 along the circumference thereof, and the substrate D1 is placed on the protrusions, to thereby prevent the substrate D1 from being scratched by contact or otherwise. Further, the turntable 12 has a plurality of suction ports H, H, ..., formed at respective locations opposed to the chucking area of the substrate D1. Accordingly, when the coating liquid R is applied, air below the substrate D1 is sucked by an air pump (not shown) via the suction ports H, H,..., whereby the substrate D1 is attracted toward the turntable 12. It should be noted that since the air pump for sucking the substrate D1 is known, illustration in figures and detailed description thereof are omitted.

The motor 13 is controllably driven by the control section 17 to rotate the turntable 12. The coating liquid supply section 14, which forms a coating liquid-dropping section together with the nozzle 14a, drops the coating liquid R for forming the spacer layer S onto the substrate D1 via the nozzle 14a under the control of the control section 17. In this process, the nozzle 14a is moved upward and downward with respect to the substrate D1 by a vertical movement mechanism, not shown. The vertical movement mechanism 15 places the stamper 21 on the substrate D1 under the control of the control section 17. The ultraviolet ray irradiation section 16 emits ultraviolet rays toward the substrate D1 under the control of the control section 17 to thereby cure the coating liquid R having applied over the surface of the substrate D1. The control section 17 controllably drives the motor 13, the coating liquid supply section 14, the vertical movement mechanism 15, and the ultraviolet ray irradiation section 16.

Next, the method of manufacturing the multilayer optical recording medium 1 will be described with reference to drawings.

First, the recording layer L1 is formed on the substrate D1 e.g. by the sputtering method. Then, the spacer layer S is formed by applying the coating liquid R onto the recording layer L1. More specifically, first, the substrate D1 is placed on the turntable 12 with the surface having the recording layer L1 formed thereon facing upward, as shown in FIG. 4. In doing this, the center pin 12c is inserted through the central mounting hole 1a of the substrate D1. In this case, since the center pin 12c is formed to have a cylindrical shape having a smaller diameter than the central mounting hole 1a of the substrate D1 as described above, it is easy to insert the center pin 12c through the central mounting hole 1a. Then, the control section 17 drives the air pump, not shown, whereby the substrate D1 having the center pin 12c inserted therethrough is sucked toward the turntable 12. Thus, the substrate D1 is fixed onto the turntable 12.

Next, the control section 17 controllably drives the motor 13 to thereby cause the turntable 12 to rotate at a rotational speed e.g. of approximately 50 rpm. Then, the control section 17 causes the nozzle 14a to move downward and controllably drives the coating liquid supply section 14 to supply the coating liquid R to the nozzle 14a. At this time, the tip of the nozzle 14a is positioned at a location radially outward of the fitting protrusion D1a. Then, due to the supply of the coating liquid R by the coating liquid supply section 14, the coating liquid R is dropped from the tip of the nozzle 14a onto the substrate D1, as shown in FIG. 5. At this time, the coating liquid is dropped to a location from which it can be naturally spread toward the inner peripheral portion of the substrate D1 by having the stamper 21 placed over the substrate D1 afterwards to completely fill the space at the inner peripheral portion thereof (space defined by the upper surface of the substrate D1, the lower surface of the stamper 21, and peripheral surface of the fitting protrusion D1a). By thus dropping the coating liquid R, it is possible to prevent formation of a remaining space, and furthermore, effectively prevent the coating thickness from being made non-uniform due to a high-speed rotation of the turn table 12. Further, in this state, the coating liquid R has some degree of viscosity, and hence, immediately after being dropped from the nozzle 14a, the coating liquid R is positioned in the vicinity of the fitting protrusion D1a on the substrate D1 and has an annular shape in top view. In this case, since the fitting protrusion D1a has an annular shape in plan view, and the central mounting hole 1a is surrounded by the fitting protrusion D1a, so that the dropped coating liquid R on the substrate D1 is held from flowing into the central mounting hole 1a, whereby the coating liquid R is prevented from being attached to the chucking area.

Then, after causing the nozzle 14a to move upward, the control section 17 controllably drives the vertical movement mechanism 15 to move the stamper 21 to a location above the substrate D1, as shown in FIG. 6. Then, as shown in FIG. 7, the control section 17 controllably drives the vertical movement mechanism 15 to place the stamper 21 over the substrate D1. In doing this, the vertical movement mechanism 15 moves the stamper 21 downward while positioning the stamper 21 such that the center pin 12c is inserted through the central hole 21a of the stamper 21. This causes the center pin 12c to be inserted into the central hole 21a and at the same time causes the fitting protrusion D1a of the substrate D1 to be fitted into the fitting groove 21b. At this time, since both the fitting protrusion D1a and the fitting groove 21b are formed to have respective annular shapes in plan view, the fitting protrusion D1a and the fitting groove 21b can be easily fitted only by moving the stamper 21 downward. Further, due to the fitting of the fitting protrusion D1a and the fitting groove 21b, the central portion of the substrate D1 and the central portion of the stamper 21 are aligned with the substrate D1 and the stamper 21 being held parallel with each other. Further, when the stamper 21 moved downward is brought into contact with the coating liquid R, the coating liquid R is first brought into line contact with the lower surface of the stamper 21, and then gradually brought into surface contact therewith. Further, as the stamper 21 is further pushed downward, the coating liquid R is gradually spread toward the outer periphery of the substrate D1 while conforming to the lower surface of the stamper 21.

Then, the control section 17 causes the rotational speed of the motor 13 to be increased to thereby increase the rotational speed of the turntable 12 to e.g. approximately 1000 rpm. This increases the centrifugal force applied to the coating liquid R, and hence, as shown in FIG. 8, the coating liquid R is rapidly spread between the substrate D1 and the stamper 21 toward the outer periphery of the substrate D1. In this process, the coating liquid R is rapidly spread (drawn), with an almost perfectly circular shape of the outline thereof in plan view being maintained, while conforming to the upper surface of the substrate D1 and the lower surface of the stamper 21. Further, as the coating liquid R is drawn, the thickness of the coating liquid R is reduced, and hence the stamper 21 performs translation (downward motion) toward the substrate D by the decreased amount of thickness of the coating liquid R. Therefore, by controlling the rotational speed of the motor 13 and the time period for maintaining high-speed rotation of the same, i.e. by controlling a shake-off amount of the coating liquid R, it is possible to accurately control the coating thickness of the coating liquid R (film thickness of the spacer layer S) to a target value. It should be noted that in this case, the substrate D and the stamper 21 are held parallel with each other by centrifugal force acting on both of them. At the same time, since the fitting protrusion D1a of the substrate D1 is fitted in the fitting groove 21b of the stamper 21, the respective central portions of the substrate D1 and the stamper 21 are maintained in the aligned state. As a result, the coating thickness of the coating liquid R along the circumference of the substrate D1 becomes uniform.

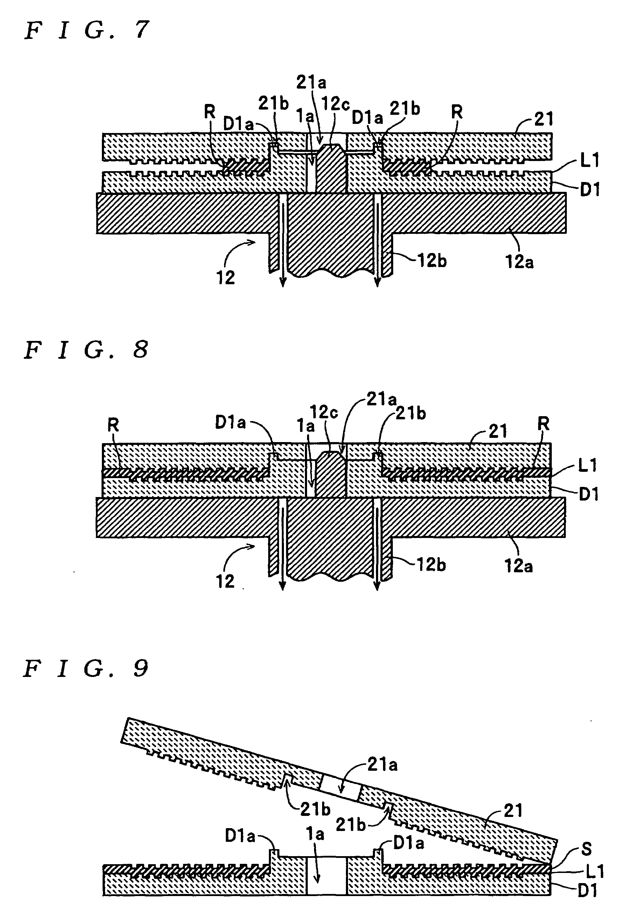

In the meantime, superfluous part of the coating liquid R having reached the radially outermost portion of the substrate D1 flies off the substrate D1 by the centrifugal force acting on the substrate D1. As a result, a layer of the coating liquid R almost uniformly applied onto the substrate D1 from the inner periphery to the outer periphery to the target thickness is formed between the substrate D1 and the stamper 21. Then, the ultraviolet ray irradiation section 16 irradiates the substrate D1 with ultraviolet rays under the control of the control section 17. As a result, the coating liquid R is cured by the ultraviolet rays applied through the stamper 21, whereby formation of the spacer layer S is completed. Then, the control section 17 carries out stop control of the motor 13 to stop the rotation of the turntable 12. Next, after stopping the air pump, the substrate D1 is removed from the turntable 12. At this time, since the center pin 12c is formed to have a diameter smaller than that of the central mounting hole 1a, the substrate D1 is easily removed. Then, the stamper 21 is removed from the substrate D1 as shown in FIG. 9. Thereafter, the recording layer L0 is formed on the spacer layer S, and then the cover layer C is formed by spin-coating the recording layer L0 with a coating liquid and curing the coating liquid on the recording layer L0. In doing this, the cover layer C is formed on the recording layer L0 such that the upper surface of the checking area is flush with the upper surface of the cover layer C, as described hereinbefore. This completes the manufacturing of the multilayer optical recording medium 1 shown in FIG. 1.

As described above, according to the coating apparatus 11, by providing the fitting groove 21b in the stamper 21, and at the same time, providing the fitting protrusion D1a which can be fitted in the fitting groove 21b, on the substrate D1, the fitting protrusion D1a is fitted into the fitting groove 21b when the stamper 21 is placed over the substrate D1 coated with the coating liquid R, which makes it possible to form the space layer S in a state where the central portion of the substrate D1 and the central portion of the stamper 21 are aligned. Therefore, it is possible to produce a non-defective multilayer optical recording medium without making the recording layers L0 and L1 off-center. Further, when the coating liquid R is drawn, since the fitting protrusion D1a and the fitting groove 21b have been fitted with each other, the substrate D1 and the stamper 21 are held parallel with each other, so that the coating thickness of the coating liquid R can be made uniform in circumferential and radial directions of the substrate D1. Further, according to this multilayer optical recording medium 1, the fitting protrusion D1a slightly protrudes from the outer peripheral portion of the chucking area, which makes it possible to effectively prevent the disk surface from being scratched when the multilayer optical recording media 1 are stacked one upon another.

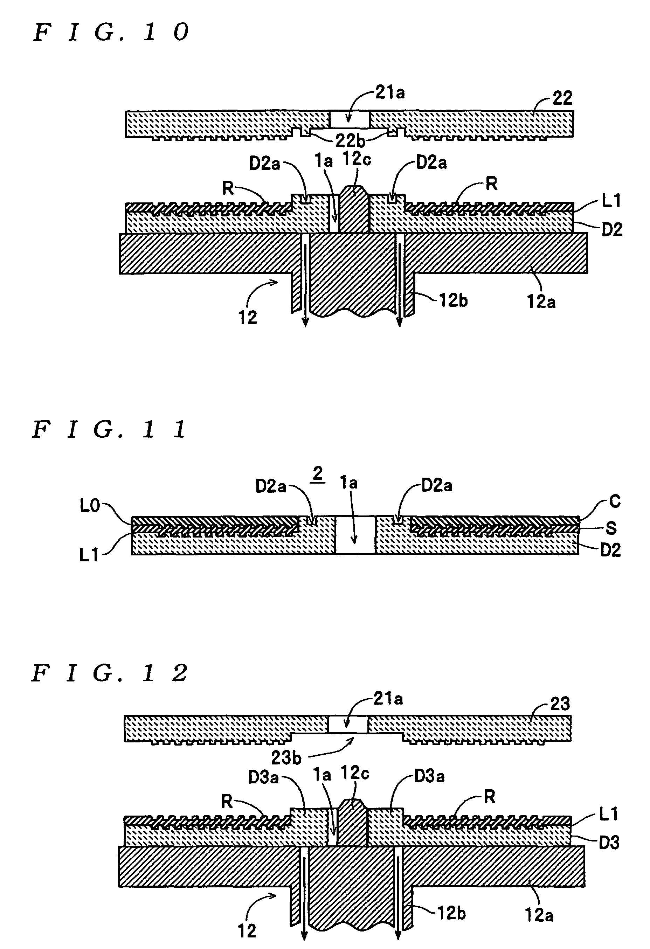

It should be noted that the present invention is by no means limited to the aforementioned embodiment but it can be modified as required. For example, the substrate D1 is not limited to the disk shape, but there may be employed any of substrates having various shapes. Further, although the embodiment of the present invention has been described based on the respective examples of the substrate D1 and the stamper 21 which have the fitting protrusion D1a and the fitting groove 21b, respectively, both annular in plan view, the present invention is not limited to this, but may be configured such that two or more, preferably three or more pin-shaped fitting protrusions are erected on one of the upper surface of the substrate and the lower surface of the stamper, and fitting recesses into which these pin-shaped fitting protrusions can be fitted are formed in the other of the upper surface of the substrate and the lower surface of the stamper, thereby enabling the substrate and the stamper to be aligned. Further, in place of the pin-shaped fitting protrusions, arcuate fitting protrusions may be formed in one of the upper surface of the substrate and the lower surface of the stamper, and arcuate fitting recesses into which these arcuate fitting protrusions can be fitted may be formed in the other of the upper surface of the substrate and the lower surface of the stamper. Further, although the embodiment of the present invention has been described based on the example of the fitting groove 21b being formed in the stamper 21 side and the fitting protrusion D1a being formed on the substrate D1 side, the present invention is not limited to this, but as in the case of a stamper 22 and a substrate D2 shown in FIG. 10, a fitting protrusion 22b may be formed on the stamper 22 side and a fitting groove D2a may be formed on the substrate D2 side. When this configuration is employed, a multilayer optical recording medium shown in FIG. 11 is produced. It should be noted that in the arrangement illustrated in FIGS. 10 and 11, elements thereof identical to those of the multilayer optical recording medium 1 and the apparatus for manufacturing the same are designated by identical numerals, and a duplicate description thereof is omitted.

Further, as in the case of a multilayer optical recording medium 3 shown in FIG. 13, all or part of the chucking area may be formed as an annular fitting protrusion (substrate-side fitting portion) D3a. In manufacturing this multilayer optical recording medium 3, as shown in FIG. 12, a stamper 23 is employed which has a fitting recess (stamper-side fitting portion) 23b formed around the central mounting hole 21a thereof, and the fitting recess 23b and the fitting protrusion D3a of the substrate D3 are fitted to each other, whereby it is possible to manufacture a non-defective optical recording medium 3 with the respective upper surfaces of the chucking area and the cover layer C being flush with each other, without making the recording layers L0 and L1 off-center. It should be noted that in the arrangement illustrated in FIGS. 11 to 13, elements thereof identical to those of the multilayer optical recording medium 1 and the apparatus for manufacturing the same are designated by identical numerals, and a duplicate description thereof is omitted.

Further, although the embodiment of the present invention has been described based on based on the example in which after completing dropping of the coating liquid R, the stamper 21 is placed over the substrate D1, and then the turn table 12 is rotated at a high speed to thereby spin-coat the coating liquid R, this is not limitative, but after completing spin-coating of the coating liquid R over the surface of the substrate D1, the stamper 21 can be placed over the substrate D1 while fitting the fitting groove 21b and the fitting protrusion D1a to each other. In this manufacturing method as well, similarly to the manufacturing method described hereinabove, when the stamper 21 is placed over the substrate D1, the fitting protrusion D1a is fitted in the fitting groove 21b to align the substrate D1 and the stamper 21, whereby it is possible to produce non-defective multilayer optical recording medium without making the recording layers L0 and L1 off-center. Further, in the above-described embodiment of the present invention, the multilayer optical recording medium 1 having two recording layers L1 and L0 has been described by way of example, this is not limitative, but the method of manufacturing a multilayer optical recording medium according to the present invention can be effectively applied to manufacturing of a multilayer optical recording medium having three or more recording layers. Furthermore, although in the embodiment of present invention, the recording layers L0 and L1 each having a phase change film are described by way of example, the recording layers in the present invention are not limited to these, but they may be in the form of recording layers each having a thin film of a dye-based resin, for example. Further, the present invention can be applied to the manufacturing of a ROM having the recording layers L0 and L1 in which information is recorded in advance by forming pits.

### Industrial Applicability

As described hereinbefore, the method of manufacturing a multilayer optical recording medium, according to the present invention, is a method of manufacturing a multilayer optical recording medium having N recording layers (N is a natural number equal to or larger than 2) deposited, with a spacer layer sandwiched therebetween, on a substrate having a central portion thereof formed with a central mounting hole, wherein in forming the spacer layer between an (M+1)-th recording layer (M is a natural number equal to or smaller than (N-1)) and an M-th recording layer, as counted from an incident direction of a laser beam to be applied during reproduction or a laser beam to be applied during recording, the substrate which has a substrate-side fitting portion formed around the central mounting hole such that the substrate-side fitting portion can be fitted to a stamper-side fitting portion formed on the stamper for forming the M-th recording layer, and the (M+1)-th recording layer formed thereon, is fixed to the turntable, in a state where a centering pin erected on a central portion of the turntable is inserted through the central mounting hole of the substrate; after a coating liquid for forming the spacer layer is dropped onto an upper surface of the substrate at a predetermined location radially outward of the substrate-side fitting portion, the stamper is placed over the substrate while fitting the stamper-side fitting portion and the substrate-side fitting portion to each other; and then the turntable is caused to rotate to thereby spin-coat the coating liquid. This makes it possible to spin-coat the substrate with the coating liquid in a state where the central portion of the substrate and that of the stamper are aligned by fitting of the substrate-side fitting portion and the stamper-side fitting portion, and therefore, it is possible to produce a non-defective multilayer optical recording medium without making the recording layers off-center. Further, during drawing of the coating liquid, the substrate and the stamper can be kept parallel with each other, so that it is possible to make uniform the coating thickness of the coating liquid in circumferential and radial directions of the substrate. This realizes the method of manufacturing a multilayer optical recording medium, which is capable of forming a spacer layer without making the respective recording layers off-center.

## Claims

1. A method of manufacturing a multilayer optical recording medium having N recording layers (N is a natural number equal to or larger than 2) deposited, with a spacer layer sandwiched therebetween, on a substrate having a central portion thereof formed with a central mounting hole,
wherein in forming the spacer layer between an (M+1)-th recording layer (M is a natural number equal to or smaller than (N-1)) and an M-th recording layer, as counted from an incident direction of a laser beam to be applied during reproduction or a laser beam to be applied during recording, the substrate which has a substrate-side fitting portion formed around the central mounting hole such that the substrate-side fitting portion can be fitted to a stamper-side fitting portion formed on the stamper for forming the M-th recording layer, and the (M+1)-th recording layer formed thereon, is fixed to the turntable, in a state where a centering pin erected on a central portion of the turntable is inserted through the central mounting hole of the substrate; after a coating liquid for forming the spacer layer is dropped onto an upper surface of the substrate at a predetermined location radially outward of the substrate-side fitting portion, the stamper is placed over the substrate while fitting the stamper-side fitting portion and the substrate-side fitting portion to each other; and then the turntable is caused to rotate to thereby spin-coat the coating liquid.

2. A method of manufacturing a multilayer optical recording medium having N recording layers (N is a natural number equal to or larger than 2) deposited, with a spacer layer sandwiched therebetween, on a substrate having a central portion thereof formed with a central mounting hole, wherein in forming the spacer layer between an (M+1)-th recording layer (M is a natural number equal to or smaller than (N-1)) and an M-th recording layer, as counted from an incident direction of a laser beam to be applied during reproduction or a laser beam to be applied during recording, the substrate which has a substrate-side fitting portion formed around the central mounting hole such that the substrate-side fitting portion can be fitted to a stamper-side fitting portion formed on the stamper for forming the M-th recording layer, and the (M+1)-th recording layer formed thereon, is fixed to the turntable, by inserting a centering pin erected on a central portion of the turntable through the central mounting hole of the substrate; after a coating liquid for forming the spacer layer is dropped onto an upper surface of the substrate at a predetermined location radially outward of the substrate-side fitting portion, the turntable is caused to rotate to thereby spin-coat the coating liquid; then the stamper is placed over the substrate while fitting the stamper-side fitting portion and the substrate-side fitting portion to each other; and the coating liquid is cured in the resulting state.

3. A method of manufacturing a multilayer optical recording medium, as claimed in claim 1, wherein an energy radiation-curable resin coating liquid is used as the coating liquid for forming the spacer layer, and a stamper formed of an energy radiation-transmissive material is used as the stamper.

4. A method of manufacturing a multilayer optical recording medium, as claimed in claim 2, wherein an energy radiation-curable resin coating liquid is used as the coating liquid for forming the spacer layer, and a stamper formed of an energy radiation-transmissive material is used as the stamper.

5. A method of manufacturing a multilayer optical recording medium, as claimed in claim 1, wherein one of the stamper-side fitting portion and the substrate-side fitting portion is formed by a fitting protrusion having an annular shape in plan view and the other thereof is formed by a fitting groove formed to be capable of being fitted on the fitting protrusion.

6. A method of manufacturing a multilayer optical recording medium, as claimed in claim 2, wherein one of the stamper-side fitting portion and the substrate-side fitting portion is formed by a fitting protrusion having an annular shape in plan view and the other thereof is formed by a fitting groove formed to be capable of being fitted on the fitting protrusion.

7. A method of manufacturing a multilayer optical recording medium, as claimed in claim 3, wherein one of the stamper-side fitting portion and the substrate-side fitting portion is formed by a fitting protrusion having an annular shape in plan view and the other thereof is formed by a fitting groove formed to be capable of being fitted on the fitting protrusion.

8. A method of manufacturing a multilayer optical recording medium, as claimed in claim 4, wherein one of the stamper-side fitting portion and the substrate-side fitting portion is formed by a fitting protrusion having an annular shape in plan view and the other thereof is formed by a fitting groove formed to be capable of being fitted on the fitting protrusion.

9. A multilayer optical recording medium manufactured by the method of manufacturing a multilayer optical recording medium as claimed in any of claims 1 to 8,
wherein the substrate-side fitting portion is formed on the substrate.
